# EUROPÄISCHE PATENTSCHRIFT

(11) **EP 2 168 227 B1**
(45) Veröffentlichungstag und Bekanntmachung des Hinweises auf die Patenterteilung: **25.10.2017**
(21) Anmeldenummer: 08759480.0
(22) Anmeldetag: 09.05.2008
(51) Int. Cl.: H02K 5/10, H02K 7/116, B60S 1/16, F16H 57/027

(54) **ANTRIEBSVORRICHTUNG**
DRIVE DEVICE
DISPOSITIF D'ENTRAÎNEMENT

(30) Priorität: 09.07.2007 DE 102007031850
(43) Veröffentlichungstag der Anmeldung: 31.03.2010
(73) Patentinhaber: Robert Bosch GmbH, 70442 Stuttgart (DE)
(72) Erfinder: WEGNER, Norbert, 77815 Buehl (DE); MUELLER, Andreas, 76863 Herxheim (DE)
(86) Internationale Anmeldenummer: PCT/EP2008/055741
(87) Internationale Veröffentlichungsnummer: WO 2009/007156

(56) Entgegenhaltungen:
- EP-A- 0 417 344
- EP-A- 0 522 183
- EP-A- 1 036 958
- DE-A1- 19 702 685
- FR-A- 2 750 810
- US-A- 5 094 098

## Beschreibung

### Stand der Technik

Die Erfindung betrifft eine Antriebsvorrichtung, insbesondere für Scheibenwischvorrichtungen in Kraftfahrzeugen, gemäß dem Oberbegriff des Anspruchs 1 sowie ein Kraftfahrzeug gemäß Anspruch 11. Es sind Antriebseinrichtungen bekannt, die einen Elektromotor mit einem Motorgehäuse (Polgehäuse) umfassen, wobei der Motorwelle des Elektromotors ein in einem Getriebegehäuse angeordnetes Getriebe, beispielsweise ein Schneckengetriebe nachgeordnet ist. Üblicherweise ist das Motorgehäuse dabei seitlich an dem Getriebegehäuse festgelegt, wobei zwischen dem Innenvolumen des Motorgehäuses und dem Innenvolumen des Getriebegehäuses ein Luftaustausch stattfinden kann. Während des Betriebs der Antriebseinrichtung erwärmt sich die Luft innerhalb des Motorgehäuses und somit auch innerhalb des Getriebegehäuses. Um einen unerwünschten Druckanstieg innerhalb des Motorgehäuses und/oder innerhalb des Getriebegehäuses zu vermeiden, ist es bekannt, in einer Gehäuseoberseite, die in der Regel von einem Deckel aus Kunststoff gebildet ist, eine Membran anzuordnen, die luftdurchlässig jedoch wasserabweisend ist. Zum Schutz der Membran vor Beschädigungen beim Einbau sitzt oberhalb der im Allgemeinen kreisförmig konturierten Membran ein Schutzdeckel mit seitlichen Öffnungen, um einen Luftaustausch zu ermöglichen. Bei derartigen, bekannten Antriebseinrichtungen ist von Nachteil, dass zum Schutz der auf der Gehäuseoberseite angeordneten Membran der beschriebene, zusätzliche Schutzdeckel vorgesehen werden muss. Ferner ist von Nachteil, dass die bekannten Antriebseinrichtungen, insbesondere aufgrund des Vorsehens eines zusätzlichen Schutzdeckels relativ hoch aufbauen, mit der Folge, dass eine erhöhte Gefahr besteht, dass der Schutzdeckel bei der Montage beschädigt oder sogar vollkommen abgeschlagen wird, was wiederum die Gefahr einer Beschädigung der Membran erhöht. Ferner ist der große Einbauraumbedarf bekannter Antriebseinrichtungen mit einer auf der Gehäuseoberseite angeordneten Membran von Nachteil.

Aus der DE 197 02 685 A1 ist bereits eine gattungsgemäße Antriebseinrichtung mit den Merkmalen des Oberbegriffs des Anspruchs 1 bekannt.

### Offenbarung der Erfindung

### Technische Aufgabe

Der Erfindung liegt die Aufgabe zugrunde, eine verbesserte Antriebseinrichtung, insbesondere für Scheibenwischvorrichtungen in Kraftfahrzeugen vorzuschlagen, deren Einbauraumbedarf minimiert ist. Vorzugsweise soll auch die Gefahr einer Beschädigung der Membran minimiert werden. Weiterhin besteht die Aufgabe ein Kraftfahrzeug mit einer entsprechend verbesserten Antriebseinrichtung vorzuschlagen.

### Technische Lösung

Die Aufgabe wird hinsichtlich der Antriebseinrichtung mit den Merkmalen des Anspruchs 1 und hinsichtlich des Kraftfahrzeugs mit den Merkmalen des Anspruchs 11 gelöst. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren offenbarten Merkmalen.

Die Erfindung hat erkannt, dass eine auf der Gehäuseoberseite angeordnete Membran leicht beschädigt werden kann und zum Schutz der Membran ein separater Schutzdeckel vorgesehen werden muss, aufgrund dessen wiederum die Antriebseinrichtung hoch baut und damit der Einbauraumbedarf groß ist. Zur Vermeidung dieser Nachteile schlägt das Konzept der Erfindung vor, die Membran seitlich am Gehäuse anzuordnen, sprich an einem Umfangswandabschnitt des Gehäuses, der mit der Gehäuseoberseite, d.h. der Flächenerstreckung der Gehäuseoberseite einen Winkel einschließt. Vorzugsweise ist die Membran an der Gehäuseseite anzubringen, an der auch das Motorgehäuse des Elektromotors der Antriebseinrichtung festgelegt ist. Durch die seitliche Anordnung der mindestens einen Membran werden überraschenderweise mehrere Vorteile gleichzeitig erzielt. Zum einen ist die Membran aufgrund einer seitlichen, insbesondere teilweise verdeckten Anordnung vor Beschädigungen besser geschützt, wodurch auf einen separaten Schutzdeckel für die Membran verzichtet werden kann. Hierdurch minimiert sich der Einbauraumbedarf, wodurch die nach dem Konzept der Erfindung ausgebildete Antriebseinrichtung auch bei beengten Platzverhältnissen montierbar ist. Ein weiterer Vorteil besteht darin, dass wenn die Antriebseinrichtung derart montiert ist, dass die Membran im eingebauten Zustand der Antriebseinrichtung mit der Horizontalen einen Winkel einschließt, auf diese auftreffendes Wasser gut abfließen und die Membran nicht verschließen kann.

In Weiterbildung der Erfindung ist mit Vorteil vorgesehen, dass der Gehäuseabschnitt, in dem das durch die Membran verschlossene Luftaustauschloch eingebracht ist, zumindest näherungsweise rechtwinklig, d.h. in einem 90°-Winkel zu der, insbesondere großflächigen Gehäuseoberseite verläuft, wodurch die Gefahr einer Beschädigung der Membran beim Einbau der Antriebseinrichtung weiter minimiert wird.

Von besonderem Vorteil ist eine Ausführungsform, bei der auch die in bzw. an den Gehäuseseitenabschnitt festgelegte Membran, zumindest näherungsweise senkrecht, d.h. rechtwinklig zu der Flächenerstreckung der Gehäuseoberseite verläuft, um im montierten Zustand der Antriebseinrichtung, bei der die Gehäuseoberseite bevorzugt zumindest näherungsweise horizontal ausgerichtet ist, auf die Membran auftreffendes Wasser erleichtert abfließen kann.

Von besonderem Vorteil ist eine Ausführungsform, bei der die Gehäuseoberseite von einem Gehäusedeckel, insbesondere von einer Gehäusedeckelfläche definiert wird. Vorzugsweise handelt es sich bei dieser Gehäusedeckelfläche um die Fläche des Gehäusedeckels mit der größten, zumindest näherungsweise, ebenen Flächenerstreckung. Von besonderem Vorteil ist eine Ausführungsform, bei der die Membran an einem, insbesondere zumindest näherungsweise rechtwinklig zu der Gehäusedeckelfläche verlaufenden Kragen angeordnet ist - der Gehäuseabschnitt, der die Membran aufnimmt, also von dem Kragen gebildet wird. Der Kragen hat vorzugsweise eine Befestigungsfunktion zum Festlegen des Gehäusedeckels an einem Gehäuseunterbau. Hierzu kann der Kragen beispielsweise Befestigungsausnehmungen aufweisen, in die Klemmlaschen (Klemmfedern) eingreifen können. Zusätzlich oder alternativ kann der insbesondere aus Kunststoff bestehende Gehäusedeckel einen Rastmechanismus oder sonstige Befestigungsmittel zum Festlegen an dem übrigen Getriebegehäuse aufweisen. Bevorzugt handelt es sich bei dem Kragen um einen umlaufenden Kragen - dies ist jedoch nicht zwangsweise notwendig. Es ist auch denkbar, dass der Kragen von mindestens einem, vorzugsweise mehreren in Umfangsrichtung beabstandeten Kragenabschnitt(en) gebildet wird. Bevorzugt umfasst der Kragen eine umlaufende stirnseitige Nut zur Aufnahme einer Ringdichtung zur Abdichtung des Gehäusedeckels gegenüber der seitlichen Gehäuseumfangswand.

Gemäß einer besonders bevorzugten Ausführungsform ist das Motorgehäuse an einer Gehäuseseite des Getriebegehäuses angeordnet, an der auch der die Membran haltende Gehäuseabschnitt angeordnet ist. Insbesondere handelt es sich dabei bei dem Gehäuseabschnitt um einen Kragenabschnitt des Gehäusedeckels.

Insbesondere eine derartig ausgebildete Antriebseinrichtung ermöglicht es, dass die Membran seitlich zumindest abschnittsweise von dem Motorgehäuse verdeckt ist - insbesondere unter Einhaltung eines Luftspaltes von vorzugsweise weniger als 5 mm zwischen dem Motorgehäuse und der Membran bzw. dem Kragen des Gehäusedeckels, um einen Luftaustausch zwischen dem Inneren des Getriebegehäuses und der Umgebung zu ermöglichen. Das Motorgehäuse, das bevorzugt als Tiefziehteil aus Metall hergestellt ist, dient somit als Schutz der Membran vor Beschädigungen, insbesondere während der Montage. Mit Vorteil erstreckt sich zumindest der die Membran verdeckende Abschnitt der Motorgehäusestirnseite zumindest näherungsweise parallel zu dem die Membran aufnehmenden Gehäuseseitenabschnitt.

Zum Festlegen der Membran an dem Gehäuseabschnitt des Getriebegehäuses, insbesondere dem Kragen des Getriebegehäuses gibt es unterschiedliche Möglichkeiten. Gemäß einer ersten Alternative wird die Membran mit dem Gehäuseabschnitt, insbesondere einem Umfangsrand der Öffnung, die von der Membran verschlossen wird, verklebt und/oder verschweißt, insbesondere ultraschallverschweißt.

Gemäß einer zweiten, bevorzugten Alternative wird die Membran zunächst in einem vorgelagerten Spritzgussprozess mit Kunststoff zur Bildung eines Stützrahmens für die Membran umspritzt, wobei die Einheit aus Stützrahmen und Membran in einem nachgelagerten Spritzgussprozess bei der Herstellung des Gehäusedeckels umspritzt wird. Der Vorspritzling (Membran + Stützrahmen) kann hierzu als Einlegeteil in ein Getriebegehäusedeckelwerkzeug eingelegt und dicht umspritzt werden. Das Umspritzen der Membran in einem vorgelagerten Spritzgussschritt, also die Herstellung eines Vorspritzlings ist von Vorteil, da die Werkzeugtemperatur des hierzu benötigten Kleinwerkzeugs niedriger ist und somit das Werkstück, also der Vorspritzling, schneller abkühlen kann. Hierdurch wird eine Beschädigung der Membran, die nur kurzzeitig höheren Temperaturen standhalten kann mit Vorteil minimiert. Zusätzlich oder alternativ zu dem Umspritzen des Kunststoffrahmens der Membran ist es möglich, den Kunststoffrahmen formschlüssig an dem Gehäuseabschnitt des Getriebegehäuses, insbesondere dem Kragen des Getriebegehäusedeckels festzulegen. Hierzu kann der den Stützrahmen aufnehmende Öffnungsrand zumindest abschnittsweise geriffelt ausgebildet werden.

Die Erfindung führt auch auf ein Kraftfahrzeug mit zumindest einer in diesem montierten, zuvor beschriebenen Antriebseinrichtung. Mit Vorteil ist die Antriebseinrichtung derart montiert, dass die Getriebegehäuseoberseite, die bevorzugt von einem Gehäusedeckel definiert ist, zumindest näherungsweise horizontal ausgerichtet ist und in der Folge die Membran zumindest näherungsweise vertikal angeordnet ist. Unter zumindest näherungsweise vertikal wird dabei ein Winkel zur Vertikalen von maximal ± 20° verstanden. Bevorzugt schließt die Membran mit der Vertikalen jedoch einen maximalen Winkel von ± 5° ein. Besonders bevorzugt ist die Membran exakt vertikal ausgerichtet.

Bevorzugt ist eine Ausführungsform, bei der die Membran mindestens zwei beabstandete Öffnungen im Gehäuseabschnitt verschließt, die das Innere des Getriebegehäuses mit der Umgebung verbinden. Sollte eine der Öffnungen verstopfen, ist immer noch ein Druckausgleich durch die andere Öffnung möglich.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Fig. 1:: eine perspektivische Ansicht einer Antriebseinrichtung mit seitlich an einem Getriebegehäuse der Antriebseinrichtung angeordneter Membran,
- Fig. 2:: den vergrößerten Ausschnitt eines Getriebegehäusedeckels einer Antriebseinrichtung mit einer seitlich in einem Kragen des Getriebegehäusedeckels angeordneten Membran und
- Fig. 3:: eine als Vorspritzling ausgebildete, von einem Getriebegehäusedeckel umspritze Einheit aus Membran mit einem umfänglichen Stützrahmen aus Kunststoff.

### Ausführungsformen der Erfindung

In den Figuren sind gleiche Bauteile und Bauteile mit der gleichen Funktion mit den gleichen Bezugszeichen gekennzeichnet.

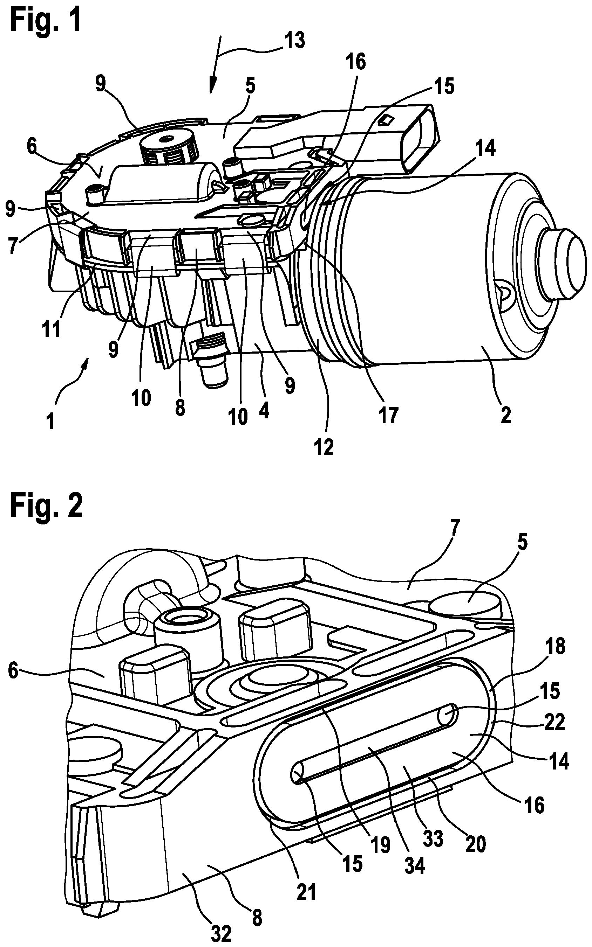

In Fig. 1 ist eine Antriebseinrichtung 1 einer Scheibenwischvorrichtung in einem Kraftfahrzeug gezeigt. Die Antriebseinrichtung umfasst einen in einem Motorgehäuse 2 (Polgehäuse) angeordneten, nicht gezeigten Elektromotor sowie ein nicht gezeigtes, in einem Getriebegehäuse 3 angeordnetes Getriebe (Schneckengetriebe) zum pendelnd Betätigen eines Wischerarms. Dabei ist der Elektromotor mit dem Getriebe im drehmomentübertragenden Eingriff.

Das Getriebegehäuse 3 umfasst einen wannenartigen Unterbau 4 aus Aluminiumdruckguss und einen an dem Unterbau 4 festgelegten Gehäusedeckel 5 aus Kunststoff. Sowohl der Unterbau 4 als auch der Gehäusedeckel 5 sind aus Kunststoff ausgebildet. Eine Gehäusedeckelfläche 6 definiert dabei eine Gehäuseoberseite 7, wobei rechtwinklig zu der Gehäusedeckelfläche 6 ein umlaufender Kragen 8 verläuft. Der Kragen ist mit in Umfangsrichtung beabstandeten Ausnehmungen 9 versehen, in die jeweils eine Metallklammer 10 eingreift, die anderenends einen Umfangsbund 11 des Unterbaus 4 hintergreift.

An einer in der Zeichnungsebene rechten Gehäuseseite 12 des Getriebegehäuses 3, die in etwa senkrecht zur Gehäuseoberseite 7 verläuft, ist das als Tiefziehteil ausgebildete Motorgehäuse 2 angeflanscht.

Der mit dem Bezugszeichen 13 gekennzeichnete Pfeil zeigt auf eine bekannte Lösung aus dem Stand der Technik. In der Gehäuseoberseite 7 befindet sich ein von einer Membran verschlossenes Loch, wobei die Membran von einer separaten Schutzkappe überdeckt ist, um einen Luftaustausch zwischen dem Inneren des Getriebegehäuses 3 und der Umgebung zu ermöglichen. Auf diese, mit dem Pfeil 13 gekennzeichnete Lösung kann aufgrund der im Folgenden, beschriebenen Lösung verzichtet werden.

An der in der Zeichnungsebene rechten Gehäuseseite 12 ist eine luftdurchlässige und wasserabweisende Membran 14 angeordnet. Diese verschließt eine Öffnung 15 innerhalb eines Gehäuseseitenabschnittes 16. Der die Membran 14 aufnehmende Gehäuseseitenabschnitt 16 wird von dem rechtwinklig zur Gehäuseoberseite 7 verlaufenden Kragen 8 des Gehäusedeckels 5 gebildet. Wie besonders gut aus Fig. 1 zu entnehmen ist, ist die langgestreckte Membran 14 mit abgerundeten Enden abschnittsweise von einer dem Getriebegehäuse 3 zugewandten Stirnseite des Motorgehäuses 2 verdeckt, wobei zwischen dem Gehäuseseitenabschnitt 16 bzw. der Membran 14 und der Stirnseite des Motorgehäuses 2 ein Luftspalt 17 gebildet ist, der einen Luftaustausch des Inneren des Getriebegehäuses 3 und des Motorgehäuses 2 mit der Umgebung ermöglicht. Dabei erstreckt sich die Stirnseite des Motorgehäuses 2 parallel zu dem Kragen 8 und damit auch parallel zu dem Gehäuseseitenabschnitt 16.

Bevorzugt ist eine Einbausituation der Antriebseinrichtung 1 in einem Kraftfahrzeug, bei der die Gehäuseoberseite 7 des Getriebegehäuses 3 auch die Oberseite der Antriebseinrichtung 1 bildet, die Gehäuseoberseite 7 also zumindest näherungsweise horizontal ausgerichtet ist, wodurch sich eine zumindest näherungsweise vertikale Ausrichtung der Membran 14 ergibt, wodurch wiederum etwaiges auf die Membran 14 auftreffendes Wasser gut abfließen kann.

In Fig. 2 ist ein Ausschnitt eines Gehäusedeckels 5 eines Getriebegehäuses 2 einer Antriebseinrichtung 1 gezeigt. Zu erkennen ist die von der großflächigen Gehäusedeckelfläche 6 gebildete Gehäuseoberseite 7 und der rechtwinklig zu dieser verlaufende, umlaufende Kragen 8. Der umlaufende Kragen 8 trägt einen Gehäuseseitenabschnitt 16. Der Gehäuseseitenabschnitt 16 ist gegenüber der diesen umschließenden Kragenaußenfläche 32 nach hinten abgesetzt. Der Gehäuseseitenabschnitt 16 weist zwei parallele, langgestreckte Längsseiten 19, 20 auf, die in zwei gegenüberliegende, abgerundete Endseiten 21, 22 übergehen. Bevorzugt verlaufen die Längsseiten 19, 20 im montierten Zustand der Antriebseinrichtung 1 parallel zur Horizontalebene. Die Form einer transparent eingezeichneten, an dem Gehäuseseitenabschnitt 16 angeordneten Membran 14 ist an die beschriebene und in Fig. 2 gezeigte Form des Gehäuseseitenabschnitts 16 angepasst. Der Gehäuseseitenabschnitt 16 ist aufgeteilt in eine äußere, ringförmige Fläche 33, mit der die Membran 14 verklebt ist und einen innerhalb der Fläche 33 liegenden Bereich 34. Die Breite der ringförmigen Fläche 33 in radialer Richtung beträgt in dem gezeigten Ausführungsbeispiel etwa 3 mm und ist vorteilhaft, um eine dauerhafte, feste Verbindung zwischen der Membran 14 und dem Kragen 8 zu gewährleisten.

Etwa mittig innerhalb der ringförmigen Fläche 33 befindet sich der erwähnte, langgestreckte, gegenüber der ringförmigen Fläche 33 nochmals nach hinten abgesetzte Bereich 34, der mit zwei beabstandeten endseitigen Öffnungen 15 versehen ist, die in das Innere des Getriebegehäuses 3 führen. Theoretisch ist es denkbar, lediglich eine einzige Öffnung vorzusehen. Durch das Vorsehen von zwei Öffnungen 15 wird das Risiko eines Verstopfens einer der Öffnungen 15, insbesondere durch ein während des Betriebes entstehendes Kohlestaub-Fett-Gemisch reduziert. Die Membran 14 ist lediglich in dem Bereich 34, der in einen mittleren Abschnitt 14 einen Luftaustauschkanal zwischen den Öffnungen 15 hinter der Membran bildet, luftdurchlässig. In ihrem übrigen, äußeren Bereich ist die Membran 14 mit der ringförmigen Fläche 33 verklebt und liegt in der Folge dicht an den Kragen 8 an.

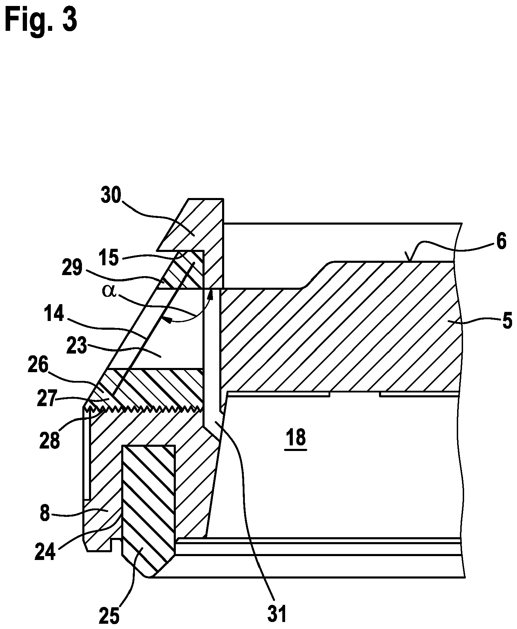

In Fig. 3 ist in einer Schnittdarstellung einer alternativen Befestigungsmöglichkeit einer Membran 14 an einem Gehäusedeckel 5 gezeigt. Der Gehäusedeckel 5 weist eine Gehäusedeckelfläche 6 auf, die einstückig mit einem umlaufenden Kragen 8 ausgebildet ist. Der Kragen 8 ist mit einer umlaufenden, nach unten offenen, rechteckförmig konturierten Nut 24 versehen, in die eine ringförmige Dichtung 25 zum Abdichten des Gehäusedeckels 5 gegenüber einem in Fig. 1 gezeigten Unterbau 4 dargestellt ist. Die in dem gezeigten Ausführungsbeispiel gemäß Fig. 3 unter einem Winkel α von etwa 120° zu der Gehäusedeckelfläche 6 geneigte Membran 14 ist umfänglich von einem Rahmen 26 aus Kunststoff umgeben, wobei der Rahmen 26 aus Kunststoff in einem vorgelagerten, separaten Spritzgussschritt als Vorspritzling erzeugt worden ist.

Der Rahmen 26 weist eine geriffelte Unterseite 27 auf, die in formschlüssigen Eingriff mit einem formkongruent geriffelten Abschnitt des Umfangsrandes 28 der Öffnung 15 steht. Aus Fig. 3 ist ferner zu erkennen, dass die Unterseite 27 des Rahmens 26 eine größere Erstreckung quer zur Vertikalen aufweist, als die gegenüberliegende Oberseite 29 des Rahmens 26, der radial außen von einem Abschnitt 30 des Gehäusedeckels 5 überragt wird.

Ein Bereich 23 unmittelbar hinter der Membran 14 ist mit einem Hauptraum 18 des Getriebegehäuses über einen Kanal 31 im Gehäusedeckel 5 verbunden.

## Patentansprüche

1. Antriebseinrichtung, insbesondere für Scheibenwischvorrichtungen in Kraftfahrzeugen, mit einem Motorgehäuse (2), das an einem eine Gehäuseoberseite (7) aufweisenden Getriebegehäuse (3) festgelegt ist, und mit einer eine im Getriebegehäuse (3) vorgesehene Öffnung (15) verschließenden, luftdurchlässigen Membran (14) zum Ermöglichen eines Druckausgleichs bei Temperaturschwankungen, wobei die Gehäuseoberseite (7) von einem Gehäusedeckel (5) mit einer Gehäusedeckelfläche (6) definiert ist und die Membran (14) an einem winklig zu einer Gehäuseoberseite (7) verlaufenden Gehäuseseitenabschnitt (16) angeordnet ist,
**dadurch gekennzeichnet,**
**dass** zumindest ein Abschnitt (30) der Membran (14) von dem Motorgehäuse (2), vorzugsweise unter Einhaltung eines Luftspaltes (17), verdeckt ist.

2. Antriebseinrichtung nach Anspruch 1,
**dadurch gekennzeichnet,**
**dass** der Gehäuseseitenabschnitt (16) zumindest näherungsweise rechtwinklig zu der Gehäuseoberseite (7) verläuft.

3. Antriebseinrichtung nach einem der Ansprüche 1 oder 2,
**dadurch gekennzeichnet,**
**dass** die Membran (14) in einer zumindest näherungsweise senkrecht zur Gehäuseoberseite (7) verlaufenden Ebene angeordnet ist.

4. Antriebseinrichtung nach einem der vorhergehenden Ansprüche,
**dadurch gekennzeichnet,**
**dass** die Gehäuseoberseite (7) von einer Gehäusedeckelfläche (6) eines Gehäusedeckels (5) mit einem rechtwinklig zur Gehäusedeckelfläche (6) verlaufenden Kragen (8) definiert wird.

5. Antriebseinrichtung nach Anspruch 4,
**dadurch gekennzeichnet,**
**dass** der die Membran (14) aufnehmende Gehäuseseitenabschnitt (16) von dem Kragen (8) gebildet ist.

6. Antriebseinrichtung nach einem der vorhergehenden Ansprüche,
**dadurch gekennzeichnet,**
**dass** das Motorgehäuse (2) an eine den Gehäuseseitenabschnitt (16) beinhaltenden Gehäuseseite (12) angrenzt.

7. Antriebseinrichtung nach einem der vorhergehenden Ansprüche,
**dadurch gekennzeichnet,**
**dass** die Membran (14) mit dem Gehäuseseitenabschnitt (16) verklebt und/oder verschweißt, vorzugsweise ultraschallverschweißt, ist.

8. Antriebseinrichtung nach einem der Ansprüche 1 bis 6,
**dadurch gekennzeichnet,**
**dass** die Membran (14) in einem, insbesondere spritzgegossenen Rahmen (26) aus Kunststoff angeordnet ist, der an dem Gehäuseseitenabschnitt (16), insbesondere durch Umspritzen, festgelegt ist.

9. Antriebseinrichtung nach Anspruch 8,
**dadurch gekennzeichnet,**
**dass** der Rahmen (26) formschlüssig, insbesondere durch verrasten, an dem Gehäuseseitenabschnitt (16) festgelegt ist.

10. Antriebseinrichtung nach einem der vorhergehenden Ansprüche,
**dadurch gekennzeichnet,**
**dass** die Membran (14) mindestens zwei voneinander beabstandete, vorzugsweise durch einen auf der Außenseite des Gehäuseseitenabschnitts (16) zwischen dem Gehäuseseitenabschnitt (16) und der Membran (14) angeordneten Kanal (31) miteinander verbundenen, Öffnungen (15) verschließend angeordnet ist.

11. Kraftfahrzeug mit einer in diesem montierten Antriebseinrichtung (1) nach einem der vorhergehenden Ansprüche.

12. Kraftfahrzeug nach Anspruch 11,
**dadurch gekennzeichnet,**
**dass** die Membran (14) in einer zumindest näherungsweise vertikalen Ebene angeordnet ist.

## Claims

1. Drive device, in particular for windscreen wiper systems in motor vehicles, having a motor housing (2) which is fixed to a gearing housing (3) which has a housing upper side (7), and having an air-permeable diaphragm (14), which closes off an opening (15) provided in the gearing housing (3), for enabling a pressure compensation in the event of temperature fluctuations, wherein the housing upper side (7) is defined by a housing lid (5) having a housing lid surface (6) and the diaphragm (14) is arranged on a housing side section (16) which runs at an angle with respect to a housing upper side (7),
**characterized**
**in that** at least one section (30) of the diaphragm (14) is covered by the motor housing (2), preferably such that an air gap (17) remains.

2. Drive device according to Claim 1,
**characterized**
**in that** the housing side section (16) runs at least approximately at right angles to the housing upper side (7).

3. Drive device according to Claim 1 or 2,
**characterized**
**in that** the diaphragm (14) is arranged in a plane which runs at least approximately perpendicular to the housing upper side (7).

4. Drive device according to one of the preceding claims,
**characterized**
**in that** the housing upper side (7) is defined by a housing lid surface (6) of a housing lid (5) having a collar (8) which runs at right angles to the housing lid surface (6).

5. Drive device according to Claim 4,
**characterized**
**in that** the housing side section (16) which holds the diaphragm (14) is formed by the collar (8).

6. Drive device according to one of the preceding claims,
**characterized**
**in that** the motor housing (2) adjoins a housing side (12) which contains the housing side section (16).

7. Drive device according to one of the preceding claims,
**characterized**
**in that** the diaphragm (14) is adhesively bonded and/or welded, preferably ultrasound-welded, to the housing side section (16).

8. Drive device according to one of Claims 1 to 6,
**characterized**
**in that** the diaphragm (14) is arranged in an in particular injection-molded frame (26) which is composed of plastic and which is fixed to the housing side section (16), in particular by being injection-molded around the latter.

9. Drive device according to Claim 8,
**characterized**
**in that** the frame (26) is fixed in a positively locking manner, in particular by latching, to the housing side section (16).

10. Drive device according to one of the preceding claims,
**characterized**
**in that** the diaphragm (14) is arranged so as to close off at least two spaced-apart openings (15) which are preferably connected to one another by means of a duct (31) which is arranged on the outer side of the housing side section (16) between the housing side section (16) and the diaphragm (14).

11. Motor vehicle having a drive device (1) according to one of the preceding claims mounted therein.

12. Motor vehicle according to Claim 11,
**characterized**
**in that** the diaphragm (14) is arranged in an at least approximately vertical plane.

## Revendications

1. Dispositif d'entraînement, en particulier pour des dispositifs d'essuie-glace dans des véhicules automobiles, avec un boîtier de moteur (2), qui est fixé sur un carter d'engrenages (3) présentant un côté supérieur de carter (7), et avec une membrane (14) perméable à l'air, fermant une ouverture (15) prévue dans le carter d'engrenages (3) pour permettre un équilibrage de pression lors de fluctuations de la température, dans lequel le côté supérieur de carter (7) est défini par un couvercle de carter (5) avec une face de couvercle de carter (6) et la membrane (14) est disposée sur une partie latérale de carter (16) inclinée par rapport à un côté supérieur de carter (7), **caractérisé en ce qu'**au moins une partie (30) de la membrane (14) est masquée par le boîtier de moteur (2), de préférence en respectant un film d'air (17).

2. Dispositif d'entraînement selon la revendication 1, **caractérisé en ce que** la partie latérale de carter (16) s'étend au moins approximativement perpendiculairement au côté supérieur de carter (7).

3. Dispositif d'entraînement selon une des revendications 1 ou 2, **caractérisé en ce que** la membrane (14) est disposée dans un plan s'étendant au moins approximativement perpendiculairement au côté supérieur de carter (7).

4. Dispositif d'entraînement selon l'une quelconque des revendications précédentes, **caractérisé en ce que** le côté supérieur de carter (7) est défini par une face de couvercle de carter (6) d'un couvercle de carter (5) avec un rebord (8) s'étendant perpendiculairement à la face de couvercle de carter (6).

5. Dispositif d'entraînement selon la revendication 4, **caractérisé en ce que** la partie latérale de carter (16) contenant la membrane (14) est formée par le rebord (8).

6. Dispositif d'entraînement selon l'une quelconque des revendications précédentes, **caractérisé en ce que** le boîtier de moteur (2) est adjacent à un côté de carter (12) contenant la partie latérale de carter (16).

7. Dispositif d'entraînement selon l'une quelconque des revendications précédentes, **caractérisé en ce que** la membrane (14) est collée et/ou soudée, de préférence soudée par ultrasons, à la partie latérale de carter (16).

8. Dispositif d'entraînement selon l'une quelconque des revendications 1 à 6, **caractérisé en ce que** la membrane (14) est disposée dans un cadre en matière plastique (26), en particulier moulé par injection, qui est fixé à la partie latérale de carter (16), en particulier par enrobage projeté.

9. Dispositif d'entraînement selon la revendication 8, **caractérisé en ce que** le cadre (26) est fixé sur la partie latérale de carter (16) par emboîtement, en particulier par encliquetage.

10. Dispositif d'entraînement selon l'une quelconque des revendications précédentes, **caractérisé en ce que** la membrane (14) est disposée de façon à fermer au moins deux ouvertures (15) espacées l'une de l'autre, de préférence reliées l'une à l'autre par un canal (31) agencé sur le côté extérieur de la partie latérale de carter (16) entre la partie latérale de carter (16) et la membrane (14).

11. Véhicule automobile avec un dispositif d'entraînement (1) selon l'une quelconque des revendications précédentes monté dans celui-ci.

12. Véhicule automobile selon la revendication 11, **caractérisé en ce que** la membrane (14) est disposée dans un plan au moins approximativement vertical.
